Europäisches Patentamt

European Patent Office

Office européen des brevets

(19)

(11) Publication number: **0 137 676**

**B1**

(12) # EUROPEAN PATENT SPECIFICATION

(45) Date of publication of patent specification: 01.06.88

(51) Int. Cl.⁴: **G 11 B 5/33**

(21) Application number: **84305753.0**

(22) Date of filing: **22.08.84**

(54) **Magnetic transducer heads utilizing magnetoresistance effect.**

(30) Priority: **25.08.83 JP 155484/83**

(43) Date of publication of application:
**17.04.85 Bulletin 85/16**

(45) Publication of the grant of the patent:
**01.06.88 Bulletin 88/22**

(84) Designated Contracting States:
**DE FR GB NL**

(56) References cited:
**AT-B- 357 789**
**DE-A-2 639 897**
**DE-A-2 744 993**
**DE-A-2 745 128**
**DE-A-3 230 416**

(73) Proprietor: **SONY CORPORATION**
**7-35 Kitashinagawa 6-Chome Shinagawa-ku**
**Tokyo 141 (JP)**

(72) Inventor: **Imakoshi, Shigeyoshi c/o Patents
Division**
**Sony Corporation 7-35 Kitashinagawa-6**
**Shinagawa-ku Tokyo (JP)**
Inventor: **Soda, Yutaka c/o Patents Division**
**Sony Corporation 7-35 Kitashinagawa-6**
**Shinagawa-ku Tokyo (JP)**
Inventor: **Suyama, Hideo c/o Patents Division**
**Sony Corporation 7-35 Kitashinagawa-6**
**Shinagawa-ku Tokyo (JP)**
Inventor: **Iida, Yasuhiro c/o Patents Division**
**Sony Corporation 7-35 Kitashinagawa-6**
**Shinagawa-ku Tokyo (JP)**

(74) Representative: **Thomas, Christopher Hugo
et al**
**D Young & Co 10 Staple Inn**
**London WC1V 7RD (GB)**

## Description

This invention relates to magnetic transducer heads utilizing magnetoresistance effect.

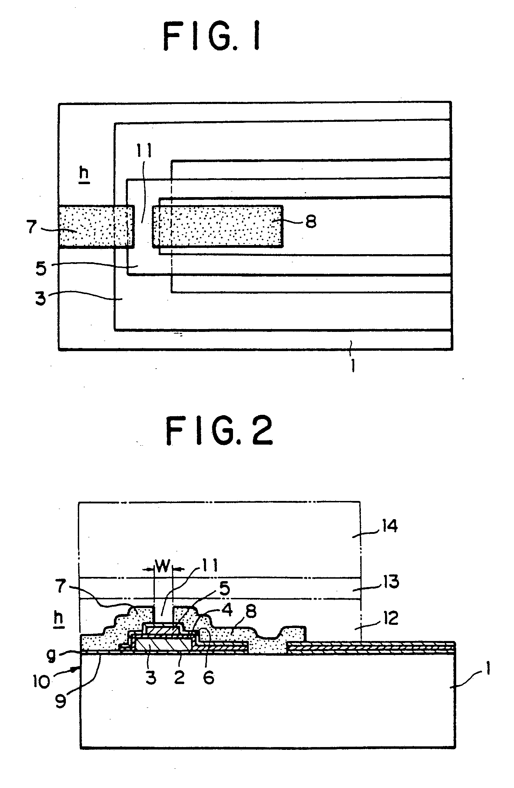

Figures 1 and 2 of the accompanying drawings are an enlarged plan view and an enlarged cross-sectional view, respectively, showing the principal parts of a magnetic head utilizing magnetoresistance effect. The magnetic head has a magnetoresistance element 5 located rearward with respect to a contact plane 10 which is to confront a magnetic recording medium, and is categorized as a so-called rear-type magnetic head. The structure of the rear-type magnetic head is as follows. On a magnetic substrate 1 made, for example, of Ni-Zn ferrite or Mn-Zn ferrite, there is deposited, overlying an insulating layer 2, for example, of $SiO_2$ or $Si_3N_4$, if the substrate 1 is conductive such as in the case of Mn-Zn ferrite, a conductor 3 in the form of a band of conductive layer for producing a bias magnetic field for a magnetoresistance element, as will be described later, by being supplied with a bias current. The conductor 3 is overlaid by an insulating layer 4 similar to the layer 2 and then by a magnetoresistance element 5 made, for example, of Ni-Fe alloy or Ni-Co alloy film and measuring, for example, $10 \times 10^{-3}$ mm wide and 300 to $500 \times 10^{-7}$ mm thick. The magnetoresistance element 5 is overlaid by a similar insulating layer 6, on which magnetic layers 7 and 8 made, for example, of Ni-Fe alloy of thickness about $7000 \times 10^{-7}$ mm are formed, so as to provide a magnetic circuit extending across the magnetoresistance element 5 and the conductor 3.

The front end of the magnetic layer 7 extends over the substrate 1 overlying a nonmagnetic gap spacer 9 having a thickness, for example, of $3000 \times 10^{-7}$ mm, and a magnetic gap g, with its gap length defined by the thickness of the gap spacer 9 between the magnetic layer 7 and substrate 1, is formed in the contact plane 10 confronting the magnetic recording medium. The rear end of the magnetic layer 8 is terminated on the substrate 1, for example, in direct contact therewith, for tight magnetic coupling. The rear end of the magnetic layer 7 and the front end of the magnetic layer 8 confront each other with a spacing W provided therebetween, so that a discontinuous section 11 of the magnetic circuit is formed, and the magnetic circuit is closed magnetically by placing the magnetoresistance element 5 in the discontinuous section 11. Thus, the rear end of the magnetic layer 7 and the front end of the magnetic layer 8 overlie the magnetoresistance element 5 through the insulating layer 6, and the insulating layer 6 is made thin so that the magnetoresistance element 5 is magnetically coupled to both end sections. Thus, a closed magnetic circuit from the substrate 1 to the magnetic gap g, the magnetic layer 7, the magnetoresistance element 5, the magnetic layer 8, and back to the substrate 1 is formed.

A magnetic head element h provided with the magnetic gap g and the magnetoresistance element 5 within the magnetic circuit on the substrate 1 is thus formed. For a multi-channel magnetic head, magnetic head elements h each constructed as described above are arrayed in parallel on the common substrate 1.

In practice, the magnetic head element h formed on the substrate 1 is covered by a nonmagnetic protection layer 12, which is joined to a protection plate 14 by an adhesive layer 13 to complete a magnetic head.

The magnetic head constructed as described above operates as follows. The magnetic flux carrying a signal produced by the magnetic recording medium confronting the contact plane 10 is conducted through the gap g to the magnetoresistance element 5 within the magnetic circuit so that the signal is detected by sensing the variation in the resistance of the magnetoresistance element 5. For this purpose, that is, in order to produce an output representative of the variation of resistance, a sensing current is supplied to the magnetoresistance element 5. In order for the magnetoresistance element 5 to have high sensitivity and linearity, it is given a certain amount of bias magnetic field by application of a current (which will be termed a "bias current") to the conductor 3.

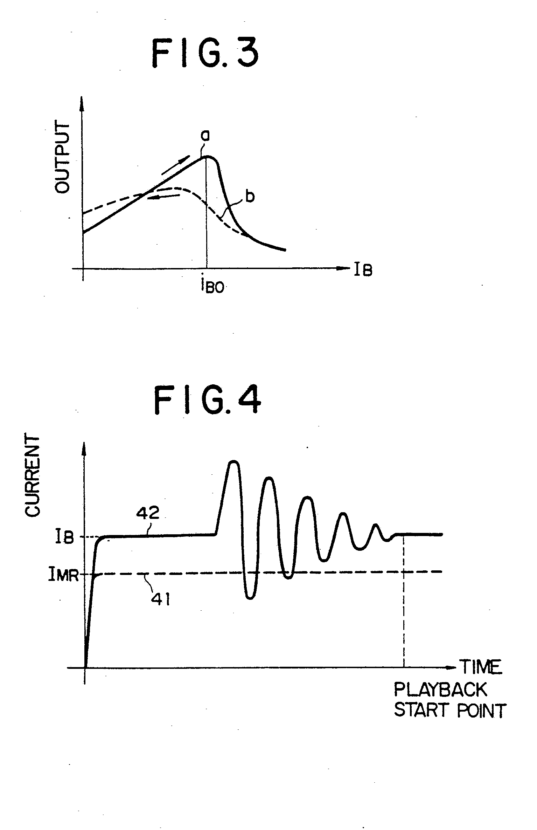

The conductor 3 providing a bias magnetic field for the magnetoresistance element 5 has an output characteristics as shown in Figure 3, in which when the magnetoresistance element 5 is supplied with a certain sensing current, the output increases linearly as shown by the solid curve a until the input bias current $i_B$ reaches a certain value $i_{Bo}$. Accordingly, the magnetic head of this type is used for reproduction of a recording on the magnetic recording medium by application of a bias current $I_B$ of about the value $i_{Bo}$ to the conductor 3. In practice, however, the magnetic circuit including the substrate 1, the magnetic layers 7 and 8, and the magnetoresistance element 5 has a property of hysteresis, and the output characteristics exhibit hysteresis as shown by the dashed curve b in Figure 3. Namely, the previous state of the magnetic head affects the output characteristics of the next playback operation, so producing a different output for the same bias current $I_B$, resulting in an unstable output of the magnetic head. This is particularly undesirable for a multi-channel magnetic head having a plurality of magnetic head elements h, in which the hysteresis of each head element h causes disparity of outputs between channels. In addition, the application of a bias current $I_B$ of about $i_{Bo}$ at the beginning of the playback operation causes the creation of an unstable magnetic domain wall, which possible causes the generation of the Barkhausen noise.

According to the present invention there is provided a magnetic transducer head utilizing the magnetoresistance effect and comprising:

a magnetoresistance effect element for sensing a magnetic field;

a current source for supplying an electric current to said magnetoresistance effect element; and

a conductor for applying a bias magnetic field to said magnetoresistance effect element by being supplied with a bias current; characterised by:

an alternating current source for supplying a decaying alternating current superimposed on said bias current to said conductor prior to the application of said magnetic field to be sensed by said magnetoresistance effect element.

The invention will now be described by way of example with reference to the accompanying drawings, throughout which like parts are referred to by like references, and in which:

Figure 1 is a plan view of a magnetic transducer head utilizing the magnetoresistance effect and to which the present invention is applied;

Figure 2 is a cross-sectional view of the magnetic transducer head of Figure 1;

Figure 3 is a graph showing the output characteristics of a magnetoresistance element plotted against the input bias current;

Figure 4 is a waveform diagram of the current supplied to a magnetoresistance element prior to a playback operation; and

Figures 5A and 5B are graphs showing the output vs. bias current characteristics of an embodiment of the present invention and a prior magnetic head, respectively.

As described with reference to Figures 1 and 2 an embodiment of the present invention forms a magnetic transducer head utilizing magnetoresistance effect. The transducer head comprises a magnetic circuit having a magnetic gap g in the contact plane 10 confronting the magnetic recording medium, a magnetoresistance element 5 disposed by a discontinuous section 11 provided separately from the magnetic gap g in the magnetic circuit, so that it couples magnetically to the magnetic circuit, and a bias conductor 3 for conducting a certain amount of bias current so as to apply a certain bias magnetic field to the magnetoresistance element 5. The magnetoresistance element 5 is also supplied with a sensing current equal to that to be supplied during the playback operation, immediately preceding the playback operation and, at the same time, the conductor 3 is supplied with a decaying alternating current superimposed on the bias current and equal to that to be supplied during the playback operation while the magnetic field representing the recorded signal is not applied to the gap g of the magnetic circuit. The decaying alternating current has a peak level to produce a magnetic field sufficient to nullify the previous magnetic trace of the head and the number of cycles before the current has completely decayed is at least ten.

In the rear-type magnetic transducer head utilizing the magnetoresistance effect as described in connection with Figures 1 and 2, the magnetoresistance effect element 5 is supplied with the same sensing current $I_{MR}$ as that supplied during the playback operation as shown by the curve 41 in Figure 4 immediately preceding the playback operation, and at the same time, the conductor 3 is supplied with a decaying alternating current superimposed on the bias current $I_B$ equal to that supplied during the playback operation as shown by the curve 42 in Figure 4, so that the magnetic circuit is invariably given a constant magnetization at the beginning of the playback operation.

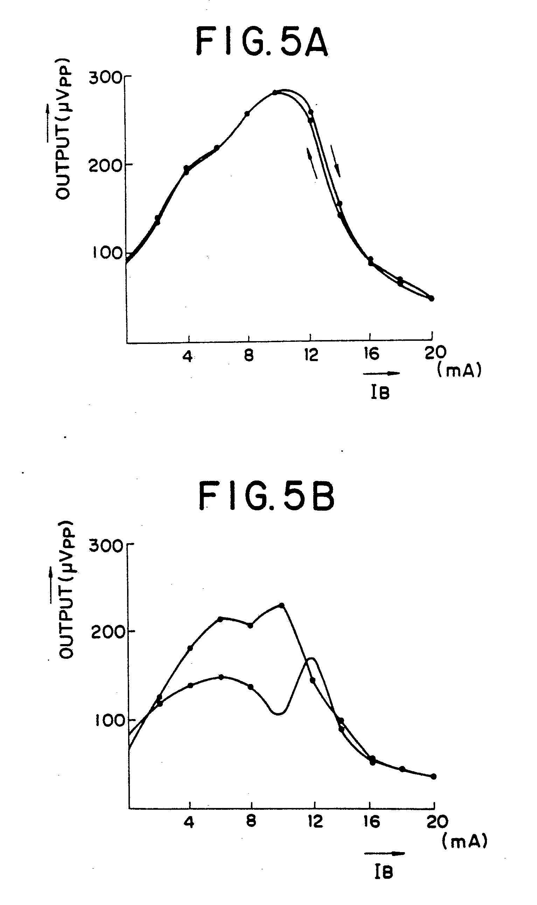

Figure 5A is a graph showing the magnetic head output measured following the application of the decaying alternating current superimposed on the bias current $I_B$. Each plot of Figure 5A is measured by application of an alternating current with a magnitude of 40 mA peak-to-peak and a frequency of 5 kHz for a duration of 100 ms followed by a decay of 50% per 10 ms, superimposed on the bias current $I_B$ at that point. During the application of the alternating current, a sensing current of 5 mA is supplied to the magnetoresistance element. In the figure, the arrows show that the measurement took place by increasing the bias current and then decreasing the bias current.

It can be seen from this output characteristic that by the application of the decaying alternating current to the conductor 3 in advance of the playback operation, a stable playback output is obtained independently of the previous bias condition of the magnetic head.

Figure 5B shows, as a comaprison with Figure 5A, the magnetic head output plotted against the bias current without application of the decaying alternating current before the playback operation. As in the case of Figure 5A, the bias current is increased up to 20 mA and then decreased to 0 mA as shown by the arrows. The figure shows that the absence of the decaying alternating current results in a considerable variation in the magnetic head output depending on the bias state before the playback operation, and therefore stable playback operation cannot be expected.

With embodiments of the present invention, as described above, the advance application of a decaying alternating current to the magnetic head allows the playback operation to begin in a constant state of magnetization, whereby stable playback output can be obtained and the Barkhausen noise can be suppressed effectively. In particular, when the invention is applied to a multi-channel magnetic head made up of an array of magnetic head elements h, each head element h is free of the aforementioned hysteresis effect, whereby disparity of output characteristics between channels can be eliminated and stable playback operation is assured.

**Claims**

1. A magnetic transducer head utilizing the magnetoresistance effect and comprising:

a magnetoresistance effect element (5) for sensing a magnetic field;

a current source for supplying an electric current

($I_{MR}$) to said magnetoresistance effect element (5); and

a conductor (3) for applying a bias magnetic field to said magnetoresistance effect element (5) by being supplied with a bias current ($I_B$); characterised by:

an alternating current source for supplying a decaying alternating current superimposed on said bias current ($I_B$) to said conductor (3) prior to the application of said magnetic field to be sensed by said magnetoresistance effect element.

2. A magnetic transducer head according to claim 1 comprising a magnetic circuit (9, 7, 8, 1) having an effective magnetic gap section (g) confronting a magnetic recording medium which provides said magnetic field which represents a recorded signal, said magnetoresistance effect element (5) being disposed by another gap section (11) provided in said magnetic circuit (9, 7, 8, 1) so that said magnetoresistance effect element (5) magnetically couples to said magnetic circuit (9, 7, 8, 1) for sensing said magnetic field provided by said recording medium.

## Patentansprüche

1. Magnetischer Wandlerkopf, welcher den magnetoresistiven Effekt verwendet, mit einem den magnetoresistiven Effekt aufweisenden Element (5) zum Erfassen eines magnetischen Feldes,

einer Stromquelle zum Liefern eines elektrischen Stroms ($I_{MR}$) in das den magnetoresistiven Effekt aufweisende Element (5) und

einem Leiter (3) zum Anlegen eines Vormagnetisierungsfeldes an das den magnetoresistiven Effekt aufweisende Element (5) durch Beliefern mit einem Vormagnetisierungsstrom ($I_B$), gekennzeichnet durch

eine Wechselstromquelle zu Leifern eines abklingenden Wechselstroms, der dem Vormagnetisierungsstrom ($I_B$) überlagert ist, in den Leiter (3) vor dem Anlegen des magnetischen Feldes, das durch das den magnetoresistiven Effekt aufweisende Element zu erfassen ist.

2. Magnetischer Wandlerkopf nach Anspruch 1, mit einem magnetischen Kreis (9, 7, 8, 1), der einen wirksamen Magnetluftspalt-Abschnitt (g) hat, welcher einem magnetischen Aufzeichnungsmedium gegenüberliegt, das das magnetische Feld erzeugt, welches ein aufgezeichnetes Signal repräsentiert, wobei das den magnetoresistiven Effekt aufweisende Element (5) durch einen anderen Spaltabschnitt (11) eingestellt ist, der in dem magnetischen Kreis (9, 7, 8, 1) vorgesehen ist, so daß das den magnetoresistiven Effekt aufweisende Element (5) magnetisch mit dem magnetischen Kreis (9, 7, 8, 1) zum Erfassen des magnetischen Feldes gekoppelt ist, das durch das Aufzeichnungsmedium erzeugt wird.

## Revendications

1. Tête transductrice magnétique utilisant l'effet de magnétorésistance et comprenant:

un élément à effet de magnétorésistance (5) servant à détecter un champ magnétique;

une source de courant servant à délivrer un courant électrique ($I_{MR}$) audit élément à effet de magnétorésistance (5); et

un conducteur (3) servant à appliquer un champ magnétique de polarisation audit élément à effet de magnétorésistance (5) et recevant l'ui-même, dans ce but, un courant de polarisation ($I_B$); caractérisée par:

une source de courant alternatif servant à délivrer audit conducteur (3) un courant alternatif s'amortissant qui se superpose audit courant de polarisation ($I_B$) avant l'application dudit champ magnétique devant être détecté par ledit élément à effet de magnétorésistance.

2. Tête transductrice magnétique selon la revendication 1, comprenant un circuit magnétique (9, 7, 8, 1) possédant une section d'entrefer magnétique effective (g) se trouvant en présence d'un support d'enregistrement magnétique qui produit ledit champ magnétique représentant un signal enregistré ledit élément à effet de magnétorésistance (5) étant disposé près d'une autre section d'entrefer (11) prévue dans ledit circuit magnétique (9, 7, 8, 1) de façon que ledit élément à effet de magnétorésistance (5) se couple magnétiquement audit circuit magnétique (9, 7, 8, 1) afin de détecter ledit champ magnétique produit par ledit support d'enregistrement.

# FIG. 1

# FIG. 2

# FIG.3

# FIG.4

# FIG.5A

# FIG.5B